# EUROPÄISCHE PATENTSCHRIFT

(11) **EP 3 847 769 B1**
(45) Veröffentlichungstag und Bekanntmachung des Hinweises auf die Patenterteilung: **20.11.2024**
(21) Anmeldenummer: 19761727.7
(22) Anmeldetag: 23.08.2019
(51) Int. Cl.: H04B 10/114, H04B 10/116, H04B 10/60

(54) **SYSTEM UND VERFAHREN ZUM BETREIBEN EINES SYSTEMS, AUFWEISEND EINE ERSTE KOMMUNIKATIONSEINHEIT UND EINE ZWEITE KOMMUNIKATIONSEINHEIT**
SYSTEM AND METHOD FOR OPERATING A SYSTEM COMPRISING A FIRST COMMUNICATION UNIT AND A SECOND COMMUNICATION UNIT
SYSTÈME ET PROCÉDÉ POUR FAIRE FONCTIONNER UN SYSTÈME, COMPRENANT UNE PREMIÈRE UNITÉ DE COMMUNICATION ET UNE DEUXIÈME UNITÉ DE COMMUNICATION

(30) Priorität: 04.09.2018 DE 102018006988
(43) Veröffentlichungstag der Anmeldung: 14.07.2021
(73) Patentinhaber: SEW-EURODRIVE GmbH & Co. KG, 76646 Bruchsal (DE)
(72) Erfinder: HUA, Zhidong, 76646 Bruchsal (DE); HOFFMANN, Manuel, 74336 Brackenheim (DE); ZAVALISHKA, Viktoriya, 68199 Mannheim (DE); SCHÄFER, Thomas, 76689 Karlsdorf-Neuthard (DE); LINDENFELSER, Michael, 76646 Bruchsal (DE); WANJEK, Andreas, 68753 Waghäusel (DE)
(86) Internationale Anmeldenummer: PCT/EP2019/025282
(87) Internationale Veröffentlichungsnummer: WO 2020/048635

(56) Entgegenhaltungen:
- EP-A1- 2 811 668
- WO-A1-2016/001339
- DE-A1- 102016 102 119

## Beschreibung

Die Erfindung betrifft ein System und ein Verfahren zum Betreiben eines Systems, aufweisend eine erste Kommunikationseinheit und eine zweite Kommunikationseinheit.

Es ist allgemein bekannt, dass ein Smartphone als Kommunikationseinheit fungiert, wobei
eine Mobilfunkverbindung mit dem Smartphone aufgebaut wird. Außerdem ist bekannt, dass auf Smartphones Anwendungsprogramme, insbesondere sogenannte Apps, abarbeitbar sind und Bilder mit einer Kamera des Smartphones aufnehmbar sind.

Aus der DE 10 2015 015 898 B4 ist ein Verfahren zur Datenübertragung bekannt, bei dem als Empfänger eine Kamera verwendet wird.

**Aus der** WO 2016/001339 A1 **ist als nächstliegender Stand der Technik ein Kommunizieren von Barcode bekannt.**

**Aus der** EP 2 811 668 A1 **ist ein Verfahren zum Empfangen von sichtbarem Licht bekannt.**

**Aus der** DE 10 2016 102119 A1 **ist eine Beleuchtungseinrichtung bekannt.**

**Aus der** US 2014 / 0 286 644 A1**, insbesondere aus der dortigen Figur, ist eine Informationsmethode und ein zugehöriges System bekannt.**

**Aus der** WO 2016 1187 328 A1 **ist eine Leistungsstrahlübertragung bekannt.**

**Aus der** WO 2012 1127 439 A1 **ist eine Lichtdetektionsmethode bekannt.**

**Aus der** WO 20161128 967 A1 **ist ein Verfahren zur Übertragung einer optisch codierten Information bekannt.**

**Aus der** US 2009 / 0 052 902 A1 **ist ein Kommunikationssystem bekannt.**

Der Erfindung liegt daher die Aufgabe zugrunde, ein System mit Kommunikationseinheiten weiterzubilden, wobei ein Datenstrom sicher erkennbar sein soll.

Erfindungsgemäß wird die Aufgabe bei dem System nach den in Anspruch 1 und bei dem Verfahren nach den in Anspruch **12** angegebenen Merkmalen gelöst.
Wichtige Merkmale der Erfindung bei dem System sind, dass das System eine erste Kommunikationseinheit, insbesondere Sender, und eine zweite Kommunikationseinheit, insbesondere einen Empfänger, aufweist,
wobei die erste Kommunikationseinheit ein steuerbares Leuchtmittel aufweist, welches entsprechend einem vorgegebenen Datenstrom moduliertes Licht abstrahlt,
wobei die zweite Kommunikationseinheit eine Kamera aufweist, welche ein optisches Element und einen Bildsensor aufweist,
wobei eine lichtsensitive Fläche des Bildsensors mehrere Zeilen von lichtsensitiven Elementen aufweist,
wobei der Bildsensor derart ausgeführt ist, dass das vom optischen Element auf die lichtsensitive Fläche des Bildsensors projizierte Bild des Leuchtmittels unscharf abgebildet ist und/oder mehr als die Hälfte der lichtsensitiven Fläche überdeckt und zeilenweise abgetastet wird,
insbesondere so, dass das Bild Streifen unterschiedlicher Helligkeit aufweist und/oder so, dass der quer zur Zeilenrichtung bewirkte Helligkeitsverlauf den zeitlichen Verlauf des Datenstroms räumlich anzeigt,
insbesondere wobei jeder Streifen jeweils Teilbereiche von Zeilen überdeckt, wobei die zweite Kommunikationseinheit eine Lenticularfolie aufweist, welche zwischen dem optischen Element und der ersten Kommunikationseinheit angeordnet ist, wobei die Vorzugsrichtung der Lenticularfolie quer zu einer Verbindungslinie zwischen Leuchtmittel und optischem Element ausgerichtet ist,wobei die zweite Kommunikationseinheit ein tragbares Kommunikationsgerät,insbesondere ein eine Kamera aufweisendes Smartphone, Tablet, Smartwatch oder Laptop, aufweist und eine Aufnahmeeinheit, welche ein erstes und ein zweites Teil aufweist,wobei das erste Teil relativ zum zweiten Teil bewegbar angeordnet ist, insbesondere drehbar, schwenkbar und/oder verschiebbar angeordnet ist.wobei das tragbare Kommunikationsgerät im ersten Teil aufgenommen ist und die Lenticularfolie im zweiten Teil aufgenommen ist.

Von Vorteil ist dabei, dass ein Verfahren zur Datenübertragung weitergebildet wird, bei dem als Empfänger eine Kamera verwendet wird. Weiter ist von Vorteil, dass eine sichere Erkennung des gesendeten Datenstroms ausführbar ist. Hierzu wird das Leuchtmittel derart unscharf abgebildet, dass das Bild nicht punktförmig, sondern einen großen Anteil der sensitiven Fläche überdeckt. Auf diese Weise ist infolge der zeitlich seriell ausgeführten Abtastung der in jeweiligen Zeilen der sensitiven Fläche angeordneten, sensitiven Elemente das projizierte Bild des Leuchtmittels gestreift. Durch die großflächige unscharfe Darstellung des Leuchtmittels sind auch die gestreiften Gebiete der sensitiven Fläche groß und bei der Bildauswertung mit einer daher verringerten Fehlerrate behaftet. Der räumliche Helligkeitsverlauf quer zur Zeilenrichtung ist also fehlerarm bestimmbar.

Bei einer vorteilhaften Ausgestaltung ist das optische Element eine Sammellinse, wobei Bildweite, insbesondere also Abstand zwischen Leuchtmitteloptischem Element, und Gegenstandsweite, insbesondere also Abstand zwischen optischem Element und lichtsensitiver Fläche, bezogen auf die Brennweite der Sammellinse derart sind, dass das Bild des Leuchtmittels unscharf ist, insbesondere derart unscharf, dass das Bild quer zur Zeilenrichtung mehr als 20 Prozent, insbesondere mehr als 50 Prozent, der Ausdehnung der lichtsensitiven Fläche quer zur Zeilenrichtung überdeckt. Von Vorteil ist dabei, dass ein vorhandenes Smartphone verwendbar ist, wenn die Kamera derart eingestellt und betrieben wird, dass die
Sammellinse der Kamera unscharf abbildet. Der räumliche Helligkeitsverlauf quer zur Zeilenrichtung ist also wiederum fehlerarm bestimmbar.

Bei einer vorteilhaften Ausgestaltung ist das optische Element eine Zerstreuungslinse, wobei Bildweite, insbesondere also Abstand zwischen Leuchtmittel optischem Element, und Gegenstandsweite, insbesondere also Abstand zwischen optischem Element und lichtsensitiver Fläche, bezogen auf die Brennweite der Sammellinse derart sind, dass das Bild des Leuchtmittels unscharf ist, insbesondere derart unscharf, dass das Bild quer zur Zeilenrichtung mehr als 20 Prozent, insbesondere mehr als 50 Prozent, der Ausdehnung der lichtsensitiven Fläche quer zur Zeilenrichtung überdeckt. Von Vorteil ist dabei, dass eine Zerstreuungslinse statt einer Sammellinse verwendbar ist oder eine Zerstreuungslinse mit betragsmäßig größerer Brechkraft als die Sammellinse sehr nahe an diese Sammellinse positionierbar ist, so dass die Linsen zusammen eine Zerstreuungslinse bilden. Somit ist das Leuchtmittel unscharf abgebildet und das streifenförmige erfasste Bild auswertbar. Der räumliche Helligkeitsverlauf quer zur Zeilenrichtung ist fehlerarm bestimmbar.

**Erfindungsgemäß** weist die zweite Kommunikationseinheit eine Lenticularfolie auf, welche zwischen dem optischen Element und der ersten Kommunikationseinheit angeordnet ist,
insbesondere wobei die Vorzugsrichtung der Lenticularfolie quer zu einer Verbindungslinie zwischen Leuchtmittel und optischem Element ausgerichtet ist. Von Vorteil ist dabei, dass das Bild in Vorzugsrichtung gedehnt projiziert wird. Hierbei ist also eine unscharfe Abbildung des Leuchtmittels erreicht, so dass das streifenförmige erfasste Bild auswertbar ist. Der räumliche Helligkeitsverlauf quer zur Zeilenrichtung ist dabei in der Signalelektronik fehlerarm bestimmbar.

Bei einer vorteilhaften Ausgestaltung ist der Bildsensor derart ausgeführt, dass die Lichtsensitive Fläche des Bildsensors zeilenweise abgetastet wird, insbesondere und dieses Abtasten der lichtsensitiven Fläche mit einer Bildfrequenz zeitlich wiederkehrend wiederholt wird. Von Vorteil ist dabei, dass das Bild seriell abgetastet wird und somit quer zur Zeilenrichtung helle und dunkle Bereiche entsprechend des zeitlichen Verlaufs sich abwechseln.

Bei einer vorteilhaften Ausgestaltung ist das System derart dimensioniert, dass das Bild des Leuchtmittels unscharf ist, insbesondere derart unscharf, dass das Bild des Leuchtmittels quer zur Zeilenrichtung mehr als 20 Prozent, insbesondere mehr als 50 Prozent, der Ausdehnung der lichtsensitiven Fläche quer zur Zeilenrichtung überdeckt und/oder dass das Bild mehr als 50 Prozent der lichtsensitiven Fläche überdeckt. Von Vorteil ist dabei, dass ein jeweiliger Streifen jeweils einen derart großen Anteil der lichtsensitiven Fläche überdeckt, dass eine fehlerarme Bestimmung des quer zur Zeilenrichtung verlaufenden Helligkeitsverlaufs der Streifen ermöglicht ist. Denn eine auf eine erste Fläche bezogene Auswertung ermöglicht eine größere Datenmenge pro Bild zu bestimmen als eine auf eine zweite Fläche bezogene Auswertung, wenn die zweite Fläche kleiner als die erste Fläche ist.

**Erfindungsgemäß** weist die zweite Kommunikationseinheit ein tragbares Kommunikationsgerät, insbesondere ein eine Kamera aufweisendes Smartphone, Tablet, Smartwatch oder Laptop, auf und eine Aufnahmeeinheit, welche eine erstes und ein zweites Teil aufweist,
wobei das erste Teil relativ zum zweiten Teil bewegbar angeordnet ist, insbesondere drehbar, schwenkbar und/oder verschiebbar angeordnet ist,
wobei das tragbare Kommunikationsgerät im ersten Teil aufgenommen ist und die Lenticularfolie im zweiten Teil aufgenommen ist,
insbesondere wobei die Aufnahmeeinheit ein Smartphone-Etui oder Smartphone-Tasche ist. Von Vorteil ist dabei, dass die Aufnahmeeinheit als Etui ausbildbar ist, welches zwei gegeneinander schwenkbare Deckel, also erstes teil und zweites Teil, aufweist. Somit deckt in einer ersten Schwenkposition die Lenticularfolie die Linse der Kamera des tragbaren Kommunikationsgeräts, insbesondere Smartphone oder Tablet, ab und in einer anderen Schwenkposition deckt die Lenticularfolie die Linse der Kamera des tragbaren Kommunikationsgeräts, insbesondere Smartphone oder Tablet, nicht ab.

Bei einer vorteilhaften Ausgestaltung wird der zeitliche Verlauf des Datenstroms, mit welchem das Leuchtmittel angesteuert, als räumlicher Helligkeits-Verlauf in Spaltenrichtung und/oder in Querrichtung zur Zeilenrichtung des Bildsensors des von der Kamera detektierten Bildes angezeigt wird,
insbesondere wobei der in Spaltenrichtung erfasste Verlauf der über die jeweilige Zeile gemittelten Helligkeit eines einzigen abgetasteten Bildes nur einen Zeitabschnitt des zeitlichen Verlaufs des vom Leuchtmittel gesendeten Datenstroms darstellt, insbesondere wobei die Zeitdauer des Zeitabschnitts dem Kehrwert der Bildfrequenz gleicht. Von Vorteil ist dabei, dass
bei geeigneter Abstimmung der Datenwortrate auf die Bildfrequenz pro Bild ein Datenwort übertragbar ist und somit eine höhere Effizienz bei der Datenübertragung erreichbar ist.

Darüber hinaus ist mittels geeigneter Software das Bild und somit der Helligkeitsverlauf auch dauerhaft darstellbar, so dass eine langandauernde Betrachtung oder Auswertung eines Beobachters ausführbar ist. Insbesondere stellt der räumliche Verlauf eines einzigen von der Kamera aufgenommenen Bildes nur einen Zeitabschnitt des zeitlichen Verlaufs dar,
insbesondere wobei der räumliche Verlauf nur im Bereich des projizierten Bildes des Leuchtmittels angeordnet ist. Somit ist der räumliche Verlauf in einfacher Weise durch eine Bildverarbeitung erkennbar und eindeutig zuordenbar.

Bei einer vorteilhaften Ausgestaltung ist der zeitliche Verlauf des Datenstroms periodisch, weist also eine Periodendauer auf, und die Bildfrequenz beim Abtasten oder ein ganzzahliges Vielfaches der Bildfrequenz beim Abtasten dem Kehrwert der Periodendauer gleicht. Von Vorteil ist dabei, dass am Anzeigemittel der zweiten Kommunikationseinheit ein stehendes Bild darstellbar ist, wenn geeignete Software verwendet wird. Denn mit der Bildwiederholfrequenz ist dann dasselbe Bild dauerhaft anzeigbar.

Bei einer vorteilhaften Ausgestaltung weist die zweite Kommunikationseinheit ebenfalls ein steuerbares Leuchtmittel, insbesondere LED, auf und die erste Kommunikationseinheit ein weiteres lichtsensitives Element,
insbesondere so, dass eine bidirektionale Datenübertragung zwischen den beiden Kommunikationseinheiten ermöglicht ist. Von Vorteil ist dabei, dass auch Daten vom zweiten zur ersten Kommunikationseinheit übertragbar sind. Somit ist eine bidirektionale Datenübertragung zwischen erster und zweiter Kommunikationseinheit ausführbar. Dabei muss die erste Kommunikationseinheit nicht als Smartphone mit Kamera ausgeführt sein,
sondern es genügt, die Signalelektronik der ersten Kommunikationseinheit mit einem lichtsensitiven Element zu verbinden.

Als lichtsensitives Element ist vorzugsweise eine Photodiode oder Phototransistor verwendbar.

Bei einer vorteilhaften Ausgestaltung ist die zweite Kommunikationseinheit als Smartphone ausgeführt und/oder fungiert als Mobilfunkgerät,
insbesondere wobei die zweite Kommunikationseinheit eine Signalelektronik und ein Anzeigemittel, insbesondere berührungssensitiver Bildschirm, aufweist. Von Vorteil ist dabei, dass die erste Kommunikationseinheit als Elektrogerät, insbesondere Umrichter zur Speisung eines Elektromotors, oder als selbsttätig bewegtes intralogistisches Transportfahrzeug, insbesondere fahrerloses Transportsystem oder automatisch geführtes Fahrzeug, ausführbar ist. Somit ist mit einem Smartphone der vom ersten Kommunikationseinheit gesendete Datenstrom mittels des Smartphones auswertbar, anzeigbar und/oder visualisierbar, insbesondere zu Zwecken der Diagnose oder Analyse. Insbesondere muss nur eine Lenticularfolie vor die Linse der Kamera gehalten werden, um ein großes, in der Vorzugsrichtung gedehntes Bild des Leuchtmittels zu erzeugen und somit eine fehlerarme Auswertung zu erreichen.

Wichtige Merkmale bei dem Verfahren zum Betreiben eines vorgenannten Systems sind, dass
beim aufgenommen Bild für jede Zeile die Differenz zwischen einem Schwellenwert und der Summe der Helligkeitswerte der lichtsensitiven Elemente, insbesondere Pixel, bestimmt wird
und somit die Folge der Differenzen einen Zeitabschnitt des zeitlichen Verlaufs des Datenstroms anzeigt, insbesondere als räumlicher Helligkeitsverlauf quer zur Zeilenrichtung,
insbesondere wobei der Schwellenwert der Mittelwert der Helligkeitswerte ist.

Von Vorteil ist dabei, dass der empfangene Datenstrom in einfacher Weise bestimmbar ist, also extrahierbar aus dem aufgenommen Bild.

Weitere Vorteile ergeben sich aus den Unteransprüchen.

Die Erfindung wird nun anhand von schematischen Abbildungen näher erläutert:
In der Figur 1 ist ein erstes erfindungsgemäßes Ausführungsbeispiel schematisch dargestellt.
In der Figur 2 ist ein zweites erfindungsgemäßes Ausführungsbeispiel schematisch dargestellt.

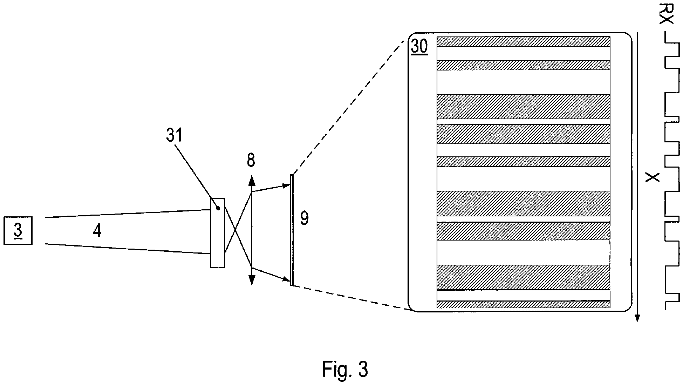

In der Figur 3 ist ein drittes erfindungsgemäßes Ausführungsbeispiel schematisch dargestellt.
In der Figur 4 ist ein tragbares Kommunikationsgerät in einer Aufnahmeeinheit, insbesondere Etui, aufgenommen, wobei die Aufnahmeeinheit aufgeklappt ist und in Schrägansicht dargestellt ist.
In der Figur 5 ist ein zweites Teil der Aufnahmeeinheit nach hinten umgeklappt.
In der Figur 6 ist eine zugehörige angeschnittene Schrägansicht dargestellt.

Wie in den Figuren dargestellt, weist ein Empfänger, insbesondere ein tragbares Kommunikationsgerät. Insbesondere Smartphone, eine Kamera auf, mit welcher von einem steuerbaren Leuchtmittel 3, insbesondere LED, eines Senders ausgestrahltes Licht detektierbar ist.

Sender und Empfänger bilden zusammen ein erfindungsgemäßes System. Hierbei ist der Sender entweder stationär innerhalb einer Anlage wie Fertigungsanlage und/oder logistische Anlage, angeordnet oder als Mobilteil ausgeführt, welches sich in einer solchen Anlage selbsttätig bewegt, insbesondere zur Ausführung eines intralogistischen Auftrags.

Das steuerbare Leuchtmittel 3 wird von einer Signalelektronik 2 mit einem beispielhaft in den Figuren dargestellten Datenstrom TX angesteuert. Somit wird das Licht entsprechend des Verlaufs des Datenstroms TX moduliert, insbesondere also getaktet angesteuert.

Einfach ausgedrückt, wird das Leuchtmittel zeitlich wiederkehrend eine jeweilige erste Zeitdauer lang angeschaltet und eine nachfolgende zweite Zeitdauer lang ausgeschaltet, so dass die Datenbits des Datenstroms nacheinander übertragen werden.

Am Empfänger ist vor der Linse 8 der Kamera eine Lenticularfolie 7 angeordnet. Brennweite und Abstände zwischen dem Leuchtmittel 3, der Linse 8 und dem Bildsensor 9 der Kamera sind derart, dass ohne die Lenticularfolie 7 ein scharfes Bild des Leuchtmittels von der Kamera aufnehmbar wäre.

Allerdings verhindert die Lenticularfolie 7 die Aufnahme eines scharfen Bildes des Leuchtmittels 3. Vielmehr ist die Lenticularfolie 7 derart nah vor der Linse 8 angeordnet, dass das Bild 10 des Leuchtmittels 3 parallel zur Vorzugsrichtung der Lenticularfolie 7 langgestreckt dargestellt ist.

Infolge der zeilenweisen Abtastung des Bildes 10 durch den Bildsensor, insbesondere also rolling shutter, ist das Bild 10 gestreift. Denn diejenigen Zeilen, welche in der jeweiligen ersten Zeitdauer abgetastet werden, sind hell und die anderen Zeilen dunkel. Die räumliche Breite der Streifen ist im Wesentlichen proportional zu den jeweiligen Zeitdauern.

Seitlich neben dem Bild 10 ist der räumliche Verlauf RX dargestellt, welchen die mit dem Bildsensor 5 verbundene Signalelektronik 6 auswertet.

Die Zeilenfrequenz der Kamera ist dabei größer, insbesondere ein ganzzahliges Vielfaches, als der Kehrwert des kürzesten Zeitabschnitts des Datenstroms RX.

Wenn nämlich die Zeilenfrequenz ein ganzzahliges Vielfaches des Kehrwertes des kürzesten Zeitabschnittes des Datenstroms RX ist und/oder der Datenstrom synchron zur Bildfrequenz periodisch ist, entsteht ein stehendes Bild 10, also ein zeitlich unveränderliches Streifenbild.

Auch ein Film ist realisierbar, wenn in entsprechender Weise nach Darstellung eines Bildes ein nächstes Bild übertragen wird.

Die Lenticularfolie 7 weist eine Vorzugsrichtung auf und besteht aus einer Kunststofffolie, die im Wesentlichen eben angeordnet ist. Die Normalenrichtung der Kunststofffolie ist parallel zur Blickrichtung der Kamera ausgerichtet, also parallel zur Symmetrieachse der Linse 8 der Kamera und/oder zu einer Verbindungslinie, die vom Leuchtmittel 3 zur Kamera verläuft.

Die Lenticularfolie 7 weist Erhebungen auf, deren Höhe, insbesondere also auch die Wandstärke der Lenticularfolie 7, parallel zur Vorzugsrichtung konstant sind und senkrecht zur Vorzugsrichtung periodisch schwankt. Quer zur Vorzugsrichtung verläuft die Wandstärke vorzugsweise halbkreisförmig oder dem Betrag einer Sinusfunktion entsprechend. Die jeweilige Erhebung weist also quer zur Vorzugsrichtung den Materialstärke-Verlauf des Querschnitts einer Sammellinse auf, parallel zur Vorzugsrichtung jedoch eine konstante Materialstärke.

Die Lenticularfolie 7 weist also parallel zur Vorzugsrichtung eine konstante Wandstärke auf, deren Wert quer zur Vorzugsrichtung periodisch schwankt, insbesondere wobei der Anstieg jeder Erhebung spiegelsymmetrisch zum jeweiligen Abstieg ist.

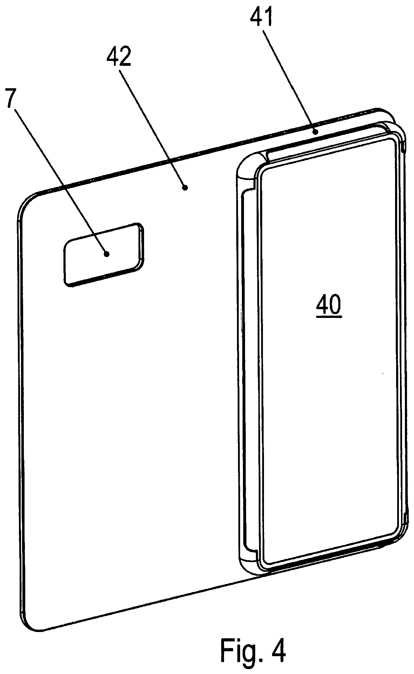

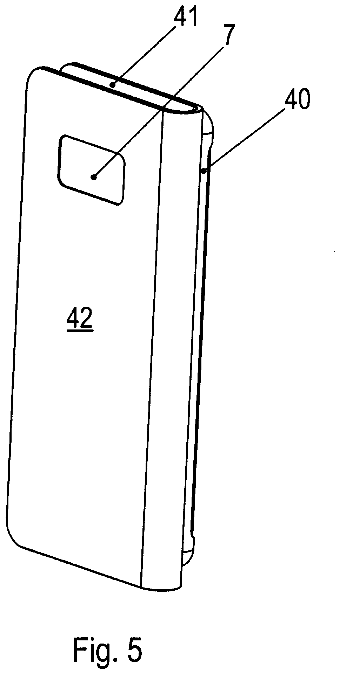

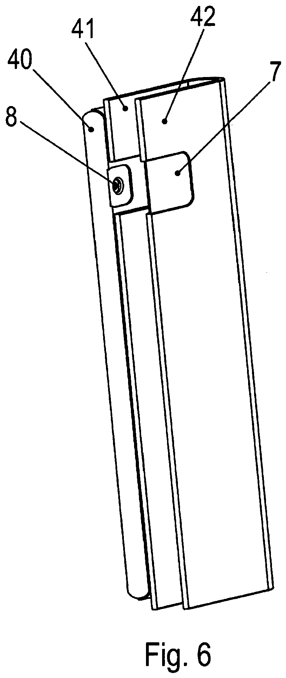

Wie in den Figuren 4 bis 6 dargestellt, ist das tragbare Kommunikationsgerät 40 in einem ersten Teil 41 einer Aufnahmeeinheit, insbesondere Etui, aufgenommen Ein gegen das erste Teil 41 schwenkbares zweites Teil 42, insbesondere Abdeckklappe, ist relativ zum ersten Teil 41 schwenkbar gelagert. in einer ersten Schwenkposition, also im zugeklappten Zustand ist das tragbare Kommunikationsgerät geschützt zwischen dem ersten und zweiten Teil (41, 42) anordenbar. In einer zweiten Schwenkposition, insbesondere also im nach hinten umgeklappten Zustand, ist das erste Teil 41 zwischen dem zweiten Teil 42 und dem tragbaren Kommunikationsgerät 40 angeordnet.

Außerdem ist eine Lenticularfolie 7 in einer Ausnehmung des zweiten Teils 42 aufgenommen, wobei die Ausnehmung derart positioniert ist, dass die Lenticularfolie 7 in der zweiten Schwenkposition beabstandet vor der Linse 8 des tragbaren Kommunikationsgeräts angeordnet ist. Insbesondere tritt somit der Strahlengang bei Aufnahme von Bildern durch die Lenticularfolie 7 hindurch und erzeugt die erfindungsgemäßen Streifenbilder zur Bestimmung des übertragenen Datenstroms.

Der von der Lenticularfolie 7 überdeckte Bereich von zum Schwenklager gemessenen Abständen umfasst den von der Linse 8 der Kamera überdeckten Bereich von zum Schwenklager gemessenen Abständen.

Die Aufnahmeeinheit ist vorzugsweise aus Leder, Kunststoff, Kunstleder oder Lederimitat.

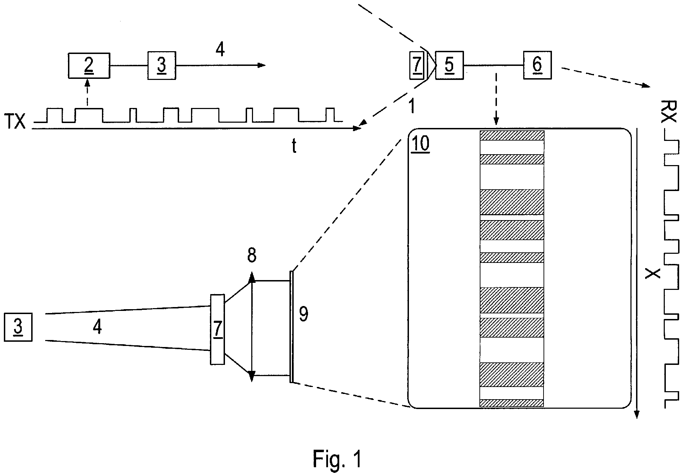

Im Unterschied zur Figur 1 ist statt der Linse 8 der Kamera aus Figur 1 eine Zerstreuungslinse 21 verwendet und die Lenticularfolie 7 nicht verwendet. Somit füllen die von dem Leuchtmittel 3 abgestrahlten Lichtstrahlen einen großen Anteil des von der Kamera aufgenommenen Bildes 20 aus und die Bestimmung der Streifen und der Breite der Streifen ist mit einer verminderten Fehlerrate ermöglicht. Auf diese Weise ist also eine fehlerarme Datenübertragung erreichbar.

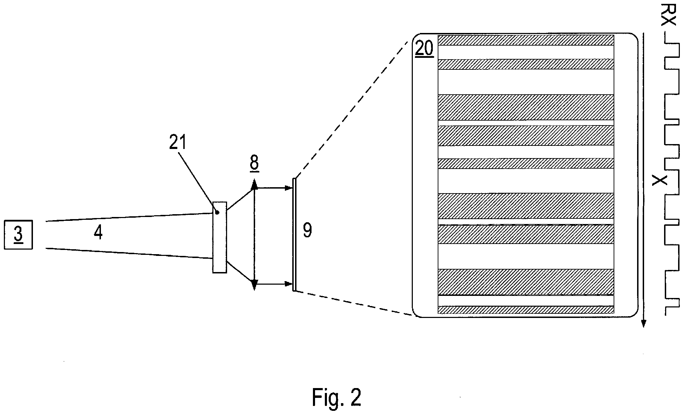

Im Unterschied zur Ausführung nach Figur 2 ist statt der Zerstreuungslinse 21 eine Sammellinse 31 verwendet, welche aber eine derartige Position, also und Gegenstandsweite, aufweist, dass das Leuchtmittel nicht scharf abgebildet, sondern unscharf abgebildet wird. Vorzugsweise ist die Gegenstandsweite derart gewählt, dass die von dem Leuchtmittel abgestrahlten Lichtstrahlen einen großen Anteil des von der Kamera aufgenommenen Bildes 20 ausfüllen. Die Bestimmung der Streifen und der Breite der Streifen ist dann ebenfalls mit einer verminderten Fehlerrate ermöglicht. Auf diese Weise ist also eine fehlerarme Datenübertragung erreichbar.

Bei weiteren erfindungsgemäßen Ausführungsbeispielen weist auch das tragbare Kommunikationsgerät ein steuerbares Leuchtmittel auf, insbesondere LED. Zur Bildung einer bidirektionalen Kommunikation ist somit dieses Leuchtmittel des Kommunikationsgeräts von der Signalelektronik 6 des tragbaren Kommunikationsgeräts Der Sender weist dabei zusätzlich einen Sensor auf, welcher das von dem Leuchtmittel des tragbaren Kommunikationsgeräts abgestrahlten Lichts, detektiert, so dass der empfangene Datenstrom in der Signalelektronik 2 auswertbar und berücksichtigbar ist.

Bei weiteren erfindungsgemäßen Ausführungsbeispielen ist der Empfänger kein tragbares Kommunikationsgerät sondern ein Mobilteil, welches in der Anlage sich selbsttätig bewegt, insbesondere zur Ausführung eines intralogistischen Auftrags.

Bei weiteren erfindungsgemäßen Ausführungsbeispielen wird statt des zeitlich wiederkehrenden Anschaltens und Ausschaltens des Leuchtmittels entweder zwischen zwei unterschiedlichen Intensitätswerten hin- und hergeschaltet. In Weiterbildung sind aber auch diskrete Intensitätsmodulationen verwendbar. Es sind auch weitergehende Modulationsarten, wie Frequenzmodulation, Pulsmodulation oder dergleichen verwendbar.

### Bezugszeichenliste

TX zeitlicher Verlauf des gesendeten Datenstroms RX räumliche Darstellung des zeitlichen Verlaufs des empfangenen Datenstroms
1 empfindlicher Bereich der Kamera 8, insbesondere des tragbaren Kommunikationsgeräts, insbesondere des Smartphones
2 Signalelektronik
3 steuerbares Leuchtmittel, insbesondere LED
4 abgestrahltes Licht
5 Kamera
6 Signalelektronik mit Anzeigemittel
7 Lenticularfolie
8 Linse
9 Bildsensor
10 Bild
20 Bild
21 Zerstreuungslinse
30 Bild
31 Sammellinse
40 tragbares Kommunikationsgerät
41 erster Teil der Aufnahmeeinheit
42 zweiter Teil der Aufnahmeeinheit
T Zeit
X Spaltenposition

## Patentansprüche

1. System, aufweisend eine erste Kommunikationseinheit, insbesondere Sender, und eine zweite Kommunikationseinheit, insbesondere einen Empfänger,
wobei die erste Kommunikationseinheit ein steuerbares Leuchtmittel (3) aufweist, welches entsprechend einem vorgegebenen Datenstrom moduliertes Licht (4) abstrahlt,
wobei die zweite Kommunikationseinheit eine Kamera (5) aufweist, welche ein optisches Element und einen Bildsensor (9) aufweist,
**wobei** eine lichtsensitive Fläche des Bildsensors (9) mehrere Zeilen von lichtsensitiven Elementen aufweist,
wobei der Bildsensor (9) derart ausgeführt ist, dass das vom optischen Element auf die lichtsensitive Fläche des Bildsensors (9) projizierte Bild des Leuchtmittels (3) unscharf abgebildet ist und/oder mehr als die Hälfte der lichtsensitiven Fläche überdeckt und zeilenweise abgetastet wird,
insbesondere so, dass das Bild Streifen unterschiedlicher Helligkeit aufweist und/oder so, dass der quer zur Zeilenrichtung bewirkte Helligkeitsverlauf den zeitlichen Verlauf des Datenstroms räumlich anzeigt,
insbesondere wobei jeder Streifen jeweils Teilbereiche von Zeilen überdeckt,
**dadurch gekennzeichnet, dass**
**die zweite Kommunikationseinheit eine Lenticularfolie (7) aufweist, welche zwischen dem optischen Element und der ersten Kommunikationseinheit angeordnet ist,**
**wobei die Vorzugsrichtung der Lenticularfolie (7) quer zu einer Verbindungslinie zwischen Leuchtmittel (3) und optischem Element ausgerichtet ist,**
**wobei die zweite Kommunikationseinheit ein tragbares Kommunikationsgerät (40), insbesondere ein eine Kamera (5) aufweisendes Smartphone, Tablet, Smartwatch oder Laptop, aufweist und eine Aufnahmeeinheit, welche ein erstes und ein zweites Teil (41, 42) aufweist,**
**wobei das erste Teil (41) relativ zum zweiten Teil (42) bewegbar angeordnet ist, insbesondere drehbar, schwenkbar und/oder verschiebbar angeordnet ist.**
**wobei das tragbare Kommunikationsgerät (40) im ersten Teil (41) aufgenommen ist und die Lenticularfolie (7) im zweiten Teil (42) aufgenommen ist.**

2. System nach Anspruch 1,
**dadurch gekennzeichnet, dass**
das optische Element eine **Sammellinse (31)** ist, wobei Bildweite, insbesondere also Abstand zwischen Leuchtmittel (3) und Sammellinse (31), und Gegenstandsweite, insbesondere also Abstand zwischen Sammellinse (31) und lichtsensitiver Fläche, bezogen auf die Brennweite der Sammellinse (31) derart sind, dass das Bild des Leuchtmittels (3) unscharf ist, insbesondere dass das Bild quer zur Zeilenrichtung mehr als 20 Prozent, insbesondere mehr als 50 Prozent, der Ausdehnung der lichtsensitiven Fläche quer zur Zeilenrichtung überdeckt oder dass das Bild mehr als 50 Prozent der lichtsensitiven Fläche überdeckt.

3. System nach Anspruch 1,
**dadurch gekennzeichnet, dass**
das optische Element eine **Zerstreuungslinse (21)** ist, wobei Bildweite, insbesondere also Abstand zwischen Leuchtmittel (3) und Zerstreuungslinse (21), und Gegenstandsweite, insbesondere also Abstand zwischen Zerstreuungslinse (21) und lichtsensitiver Fläche, bezogen auf die Brennweite der Sammellinse (31) derart sind, dass das Bild des Leuchtmittels (3) unscharf ist, insbesondere dass das Bild quer zur Zeilenrichtung mehr als 20 Prozent, insbesondere mehr als 50 Prozent, der Ausdehnung der lichtsensitiven Fläche quer zur Zeilenrichtung überdeckt oder dass das Bild mehr als 50 Prozent der lichtsensitiven Fläche überdeckt.

4. System nach einem der vorangegangenen Ansprüche,
**dadurch gekennzeichnet, dass**
**die Aufnahmeeinheit ein Smartphone-Etui oder Smartphone-Tasche ist.**

5. System nach einem der vorangegangenen Ansprüche,
**dadurch gekennzeichnet, dass**
der Bildsensor (9) derart ausgeführt ist, dass die Lichtsensitive Fläche des Bildsensors (9) zeilenweise abgetastet wird, insbesondere und dieses Abtasten der lichtsensitiven Fläche mit einer Bildfrequenz zeitlich wiederkehrend wiederholt wird.

6. System nach einem der vorangegangenen Ansprüche,
**dadurch gekennzeichnet, dass**
das System derart dimensioniert ist, dass das Bild des Leuchtmittels (3) unscharf ist, insbesondere derart unscharf ist, dass das Bild quer zur Zeilenrichtung mehr als 20 Prozent, insbesondere mehr als 50 Prozent, der Ausdehnung der lichtsensitiven Fläche quer zur Zeilenrichtung überdeckt oder dass das Bild mehr als 50 Prozent der lichtsensitiven Fläche überdeckt.

7. System nach einem der vorangegangenen Ansprüche,
**dadurch gekennzeichnet, dass**
der zeitliche Verlauf des Datenstroms, mit welchem das Leuchtmittel (3) angesteuert wird, als ein räumlicher Helligkeits-Verlauf des von der Kamera (5) aufgenommenen Bildes in Spaltenrichtung und/oder in Querrichtung zur Zeilenrichtung des Bildsensors (9) der Kamera (5) angezeigt wird,
insbesondere wobei der räumliche Verlauf eines einzigen von der Kamera (5) aufgenommenen Bildes nur einen Zeitabschnitt des zeitlichen Verlaufs darstellt,
insbesondere wobei der räumliche Verlauf nur im Bereich des projizierten Bildes des Leuchtmittels (3) angeordnet ist.

8. System nach einem der vorangegangenen Ansprüche,
**dadurch gekennzeichnet, dass**
der zeitliche Verlauf des Datenstroms periodisch ist, also eine Periodendauer aufweist, und
die Bildfrequenz beim Abtasten oder ein ganzzahliges Vielfaches der Bildfrequenz beim Abtasten dem Kehrwert der Periodendauer gleicht.

9. System nach einem der vorangegangenen Ansprüche,
**dadurch gekennzeichnet, dass**
die zweite Kommunikationseinheit ebenfalls ein steuerbares Leuchtmittel (3), insbesondere LED, aufweist und die erste Kommunikationseinheit ein weiteres lichtsensitives Element aufweist,
insbesondere so, dass eine bidirektionale Datenübertragung zwischen den beiden Kommunikationseinheiten ermöglicht ist.

10. System nach einem der vorangegangenen Ansprüche,
**dadurch gekennzeichnet, dass**
die zweite Kommunikationseinheit als Smartphone ausgeführt ist und/oder als Mobilfunkgerät fungiert,
insbesondere wobei die zweite Kommunikationseinheit eine Signalelektronik (2, 6) und ein Anzeigemittel, insbesondere berührungssensitiver Bildschirm, aufweist.

11. System nach einem der vorangegangenen Ansprüche,
**dadurch gekennzeichnet, dass**
die erste Kommunikationseinheit ein Elektrogerät, insbesondere Umrichter zur Speisung eines Elektromotors, oder ein selbsttätig bewegtes intralogistisches Transportfahrzeug, insbesondere fahrerloses Transportsystem oder automatisch geführtes Fahrzeug, ist.

12. Verfahren zum Betreiben eines Systems nach einem der vorangegangenen Ansprüche,
**dadurch gekennzeichnet, dass**
beim aufgenommenen Bild für jede Zeile die Differenz zwischen einem Schwellwert und der Summe der Helligkeitswerte der lichtsensitiven Elemente, insbesondere Pixel, bestimmt wird und somit die Folge der Differenzen einen Zeitabschnitt des zeitlichen Verlaufs des Datenstroms anzeigt, insbesondere als räumlicher Helligkeitsverlauf quer zur Zeilenrichtung,
insbesondere wobei der Schwellwert der Mittelwert der Helligkeitswerte ist.

## Claims

1. System comprising a first communication unit, in particular a transmitter, and a second communication unit, in particular a receiver,
wherein the first communication unit comprises a controllable lamp (3) which emits light (4) that has been modulated in accordance with a predetermined data stream,
wherein the second communication unit comprises a camera (5), which comprises an optical element and an image sensor (9),
wherein a light-sensitive area of the image sensor (9) comprises a plurality of rows of light-sensitive elements,
wherein the image sensor (9) is configured such that the image of the lamp (3), projected by the optical element onto the light-sensitive area of the image sensor (9), is imaged in a blurred manner and/or covers more than half of the light-sensitive area and is scanned row by row,
in particular such that the image comprises stripes of different brightness and/or such that the brightness characteristic produced transversely to the direction of the rows spatially displays the time characteristic of the data stream,
in particular wherein each stripe covers portions of rows in each case,
**characterised in that**
the second communication unit comprises a lenticular film (7) which is arranged between the optical element and the first communication unit,
wherein the preferential direction of the lenticular film (7) is oriented transversely to a connecting line between the lamp (3) and the optical element,
wherein the second communication unit comprises a portable communication device (40), in particular a smartphone, tablet, smartwatch or laptop comprising a camera (5), as well as a support unit which comprises a first and a second part (41, 42),
wherein the first part (41) is arranged so as to be movable relative to the second part (42), in particular is arranged so as to be rotatable, pivotable and/or displaceable,
wherein the portable communication device (40) is supported in the first part (41) and the lenticular film (7) is supported in the second part (42).

2. System according to claim 1,
**characterised in that**
the optical element is a convergent lens (31), wherein the image distance, i.e. in particular the distance between the lamp (3) and the convergent lens (31), and the object distance, i.e. in particular the distance between the convergent lens (31) and the light-sensitive area, in relation to the focal distance of the convergent lens (31), are such that the image of the lamp (3) is blurred, in particular such that, transversely to the direction of the rows, the image covers more than 20 percent, in particular more than 50 percent, of the extent of the light-sensitive area transversely to the direction of the rows, or such that the image covers more than 50 percent of the light-sensitive area.

3. System according to claim 1,
**characterised in that**
the optical element is a divergent lens (21), wherein the image distance, i.e. in particular the distance between the lamp (3) and the divergent lens (21), and the object distance, i.e. in particular the distance between the divergent lens (21) and the light-sensitive area, in relation to the focal distance of the convergent lens (31), are such that the image of the lamp (3) is blurred, in particular such that, transversely to the direction of the rows, the image covers more than 20 percent, in particular more than 50 percent, of the extent of the light-sensitive area transversely to the direction of the rows, or such that the image covers more than 50 percent of the light-sensitive area.

4. System according to any of the preceding claims,
**characterised in that**
the support unit is a smartphone case or a smartphone sleeve.

5. System according to any of the preceding claims,
**characterised in that**
the image sensor (9) is configured such that the light-sensitive area of the image sensor (9) is scanned row by row, and in particular this scanning of the light-sensitive area is repeated recurrently over time at a frame frequency.

6. System according to any of the preceding claims,
**characterised in that**
the system is dimensioned such that the image of the lamp (3) is blurred, in particular is so blurred that, transversely to the direction of the rows, the image covers more than 20 percent, in particular more than 50 percent, of the extent of the light-sensitive area transversely to the direction of the rows, or such that the image covers more than 50 percent of the light-sensitive area.

7. System according to any of the preceding claims,
**characterised in that**
the time characteristic of the data stream by which the lamp (3) is activated is displayed as a spatial brightness characteristic of the image taken by the camera (5) in the direction of the columns and/or in the transverse direction to the direction of the rows of the image sensor (9) of the camera (5),
in particular wherein the spatial characteristic of a single image taken by the camera (5) represents just one time interval of the time characteristic,
in particular wherein the spatial characteristic is arranged only in the region of the projected image of the lamp (3).

8. System according to any of the preceding claims,
**characterised in that**
the time characteristic of the data stream is periodic, i.e. has a period duration, and the frame frequency during the scanning, or an integer multiple of the frame frequency during the scanning, is equal to the inverse of the period duration.

9. System according to any of the preceding claims,
**characterised in that**
the second communication unit likewise comprises a controllable lamp (3), in particular an LED, and the first communication unit comprises a further light-sensitive element, in particular such that data can be transmitted bidirectionally between the two communication units.

10. System according to any of the preceding claims,
**characterised in that**
the second communication unit is configured as a smartphone and/or operates as a mobile communications device,
in particular wherein the second communication unit comprises signal electronics (2, 6) and a display means, in particular a touch-sensitive screen.

11. System according to any of the preceding claims,
**characterised in that**
the first communication unit is an electrical device, in particular a converter for feeding an electric motor, or an autonomously moving intralogistics transportation vehicle, in particular a driverless transportation system or a self-driving vehicle.

12. Method for operating a system according to any of the preceding claims,
**characterised in that**
in the image taken, for each row the difference between a threshold value and the sum of the brightness values of the light-sensitive elements, in particular pixels, is determined, and thus the series of differences displays one time interval of the time characteristic of the data stream, in particular as a spatial brightness characteristic transverse to the direction of the rows, in particular wherein the threshold value is the average of the brightness values.

## Revendications

1. Système, comprenant une première unité de communication, en particulier un émetteur, et une deuxième unité de communication, en particulier un récepteur,
dans lequel la première unité de communication présente une source lumineuse (3) pouvant être commandée et émettant de la lumière modulée (4) en fonction d'un flux de données prédéterminé,
dans lequel la deuxième unité de communication comprend une caméra (5) qui présente un élément optique et un capteur d'image (9),
dans lequel une surface photosensible du capteur d'image (9) présente plusieurs lignes d'éléments photosensibles,
dans lequel le capteur d'image (9) est mis en oeuvre de telle manière que l'image de la source lumineuse (3) projetée par l'élément optique sur la surface photosensible du capteur d'image (9) est floue et/ou plus de la moitié de la surface photosensible est recouverte et balayée ligne par ligne,
en particulier de sorte que l'image présente des bandes de luminosité différente et/ou de sorte que la courbe de luminosité induite transversalement par rapport au sens des lignes indique spatialement la courbe temporelle du flux de données,
en particulier dans lequel chaque bande recouvre respectivement des sous-régions de lignes,
**caractérisé en ce que**
la deuxième unité de communication présente une feuille lenticulaire (7) qui est agencée entre l'élément optique et la première unité de communication,
dans lequel la direction préférentielle de la feuille lenticulaire (7) est orientée transversalement par rapport à une ligne de liaison entre la source lumineuse (3) et l'élément optique,
dans lequel la deuxième unité de communication comprend un appareil de communication portable (40), en particulier un smartphone, une tablette, une montre connectée ou un ordinateur portable présentant une caméra (5), et une unité d'accueil présentant des première et deuxième parties (41, 42),
dans lequel la première partie (41) est agencée de manière mobile, en particulier est agencée de manière rotative, pivotante et/ou coulissante, par rapport à la deuxième partie (42),
dans lequel l'appareil de communication portable (40) est accueilli dans la première partie (41) et la feuille lenticulaire (7) est accueillie dans la deuxième partie (42).

2. Système selon la revendication 1,
**caractérisé en ce que**
l'élément optique est une lentille convergente (31), dans lequel la largeur d'image, en particulier la distance entre la source lumineuse (3) et la lentille convergente (31), et la largeur d'objet, en particulier la distance entre la lentille convergente (31) et la surface photosensible, par rapport à la distance focale de la lentille convergente (31), sont telles que l'image de la source lumineuse (3) est floue, en particulier telles que l'image transversalement par rapport au sens des lignes recouvre plus de 20 %, en particulier plus de 50 %, de l'étendue de la surface photosensible transversalement par rapport au sens des lignes ou telles que l'image recouvre plus de 50 % de la surface photosensible.

3. Système selon la revendication 1,
**caractérisé en ce que**
l'élément optique est une lentille divergente (21), dans lequel la largeur d'image, en particulier la distance entre la source lumineuse (3) et la lentille divergente (21), et la largeur d'objet, en particulier la distance entre la lentille divergente (21) et la surface photosensible, par rapport à la distance focale de la lentille convergente (31), sont telles que l'image de la source lumineuse (3) est floue, en particulier telles que l'image transversalement par rapport au sens des lignes recouvre plus de 20 %, en particulier plus de 50 %, de l'étendue de la surface photosensible transversalement par rapport au sens des lignes ou telles que l'image recouvre plus de 50 % de la surface photosensible.

4. Système selon l'une quelconque des revendications précédentes,
**caractérisé en ce que**
l'unité d'accueil est un étui pour smartphone ou une housse pour smartphone.

5. Système selon l'une quelconque des revendications précédentes,
**caractérisé en ce que**
le capteur d'image (9) est mis en oeuvre de telle manière que la surface photosensible du capteur d'image (9) est balayée ligne par ligne, en particulier ledit balayage de la surface photosensible est répété de manière récurrente avec une fréquence d'images.

6. Système selon l'une quelconque des revendications précédentes,
**caractérisé en ce que**
le système est dimensionné de telle manière que l'image de la source lumineuse (3) est floue, en particulier est floue de telle manière que l'image transversalement par rapport au sens des lignes recouvre plus de 20 pour cent, en particulier plus de 50 pour cent, de l'étendue de la surface photosensible transversalement par rapport au sens des lignes ou telles que l'image recouvre plus de 50 pour cent de la surface photosensible.

7. Système selon l'une quelconque des revendications précédentes,
**caractérisé en ce que**
la courbe temporelle du flux de données, avec laquelle la source lumineuse (3) est commandée, est affichée sous la forme d'une courbe de luminosité spatiale de l'image prise par la caméra (5) dans le sens des colonnes et/ou dans une direction transversale par rapport au sens des lignes du capteur d'image (9) de la caméra (5),
en particulier dans lequel la courbe spatiale d'une seule image prise par la caméra (5) ne représente qu'un intervalle de la courbe temporelle,
en particulier dans lequel la courbe spatiale n'est située que dans la région de l'image projetée de la source lumineuse (3).

8. Système selon l'une quelconque des revendications précédentes,
**caractérisé en ce que**
la courbe temporelle du flux de données est périodique, c'est-à-dire qu'elle présente une durée de période, et
la fréquence d'images lors du balayage ou un multiple entier de la fréquence d'images lors du balayage est égal(e) à la valeur inverse de la durée de période.

9. Système selon l'une quelconque des revendications précédentes,
**caractérisé en ce que**
la deuxième unité de communication présente également une source lumineuse (3) pouvant être commandée, en particulier une LED, et la première unité de communication présente un élément photosensible supplémentaire,
en particulier de manière à permettre une transmission de données bidirectionnelle entre les deux unités de communication.

10. Système selon l'une quelconque des revendications précédentes,
**caractérisé en ce que**
la deuxième unité de communication est mise en oeuvre sous la forme d'un smartphone et/ou fonctionne comme un appareil de radiocommunication mobile,
en particulier dans lequel la deuxième unité de communication présente une électronique de signal (2, 6) et un moyen d'affichage, en particulier un écran tactile.

11. Système selon l'une quelconque des revendications précédentes,
**caractérisé en ce que**
la première unité de communication est un appareil électrique, en particulier un convertisseur permettant d'alimenter un moteur électrique, ou un véhicule de transport intralogistique se déplaçant de manière autonome, en particulier un système de transport sans conducteur ou un véhicule guidé de manière automatique.

12. Procédé de fonctionnement d'un système selon l'une quelconque des revendications précédentes,
**caractérisé en ce que**
la différence entre une valeur de seuil et la somme des valeurs de luminosité des éléments photosensibles, en particulier des pixels, est déterminée pour chaque ligne de l'image prise, et la séquence des différences indique ainsi un intervalle de la courbe temporelle du flux de données, en particulier sous la forme d'une courbe de luminosité spatiale transversalement par rapport au sens des lignes,
en particulier dans lequel la valeur de seuil est la valeur moyenne des valeurs de luminosité.
